# FASCICULE DE BREVET EUROPEEN

(11) **EP 1 047 892 B1**
(45) Date de publication et mention de la délivrance du brevet: **26.06.2002**
(21) Numéro de dépôt: 99900975.6
(22) Date de dépôt: 21.01.1999
(51) Int. Cl.: F16K 1/52, F16K 31/06

(54) **VANNE DE REGLAGE DE DEBIT**
VENTIL ZUR REGELUNG DER DURCHFLUSSMENGE
FLOW REGULATING VALVE

(30) Priorité: 21.01.1998 FR 9800593
(43) Date de publication de la demande: 02.11.2000
(73) Titulaire: A Theobald S.A., 77200 Torcy (FR)
(72) Inventeur: PECHOUX, Christophe, F-77200 Torcy (FR); VILLERMAUX, Claude, F-92320 Chatillon sous Bagneux (FR)
(74) Mandataire: Roger-Petit, Georges
(86) Numéro de dépôt international: FR9900118
(87) Numéro de publication internationale: WO9937943

(56) Documents cités:
- WO-A-89/11609
- CH-A- 581 284
- FR-A- 619 503
- US-A- 2 117 182
- US-A- 2 541 176
- US-A- 3 428 086
- US-A- 4 125 129

## Description

La présente invention concerne une vanne pour le réglage du débit d'un fluide liquide ou gazeux, du type comprenant un corps ayant une entrée et une sortie pour le fluide, une cloison qui sépare l'entrée de la sortie et qui comporte un alésage cylindrique à l'une des extrémités duquel est formé un siège circulaire, un clapet mobile dans la direction axiale du siège circulaire entre des première et seconde positions dans lesquelles la vanne est respectivement fermée et ouverte, et un moyen de commande relié fonctionnellement audit clapet pour l'amener dans n'importe quelle position axiale désirée entre ses première et seconde positions afin de régler le débit du fluide, ledit clapet comportant une première partie qui fait office d'élément d'obturation quand le clapet est dans sa première position, et une seconde partie qui est engagée dans ledit alésage et qui est conformée pour régler le débit du fluide à une valeur désirée selon la position axiale sélectionnée du clapet entre ses première et seconde positions.

Des vannes connues de ce type sont par exemple décrites dans les documents US-A-3 108 777 et FR-A-2 650 362. Dans ces deux documents, la première partie du clapet mobile a sensiblement la forme d'un disque et est reliée par une tige au noyau mobile d'un électro-aimant servant de moyen de commande. Lorsque la bobine de l'électro-aimant n'est pas excitée, le clapet est maintenu dans sa première position ou position de fermeture de la vanne par un ressort de rappel. Dans ces électrovannes connues, la seconde partie du clapet est constituée par une pièce qui a une forme de révolution autour de l'axe de la tige, par exemple une forme tronconique, et qui est fixée rigidement à la première partie du clapet. Ainsi, en donnant une forme prédéfinie à la génératrice de la surface de révolution qui constitue la surface extérieure de la seconde partie du clapet, il est en principe possible d'obtenir une caractéristique débit/déplacement désirée quand le clapet est déplacé axialement. Toutefois, dans la pratique, pour obtenir effectivement la caractéristique débit/déplacement désirée, une telle construction du clapet impose un centrage ou alignement parfait de l'axe de sa surface de révolution avec l'axe du siège circulaire de l'électrovanne. Ceci exige une grande précision dans la fabrication du siège et du clapet, dans le montage de ces deux éléments l'un par rapport à l'autre et dans le guidage de la tige de commande dudit clapet, de sorte qu'une telle électrovanne est relativement coûteuse.

En outre, dans certains domaines d'utilisation, comme par exemple dans le domaine des chaudières à gaz où des électrovannes du genre sus-indiqué sont utilisées comme moyen de réglage pour moduler le débit du gaz combustible envoyé à une chambre de mélange air/gaz précédent le brûleur de la chaudière, en fonction de la puissance instantanée de chauffage demandée à la chaudière, tout en maintenant le débit de gaz et le débit d'air dans un rapport prédéterminé, il est souvent souhaitable que le réglage du débit de gaz puisse s'effectuer de manière très fine et régulière, spécialement dans la plage des faibles débits, c'est-à-dire lorsque la première partie du clapet mobile se trouve dans une position axiale très proche du siège circulaire de l'électrovanne. Autrement dit, dans cette plage des faibles débits, il est souhaitable qu'un déplacement axial donné du clapet de l'électrovanne n'entraîne qu'une faible variation du débit du fluide traversant l'électrovanne, donc que la caractéristique débit/déplacement de celle-ci ait une faible pente dans la plage des faibles débits. En pratique, ceci est difficile à obtenir avec une électrovanne connue du genre sus-indiqué, dans laquelle la seconde partie du clapet mobile a une surface extérieure tronconique.

En outre, dans les électrovannes connues du genre sus-indiqué, il est usuel d'exciter l'électro-aimant à l'aide d'un courant alternatif ou du type alternatif afin d'éliminer au moins partiellement l'hystérésis magnétique de l'électro-aimant si celui-ci était alimenté en courant continu. Toutefois, l'excitation de l'électro-aimant en courant alternatif provoque des oscillations du clapet, qui se traduisent par des oscillations du débit et de la pression du gaz en aval de l'électrovanne. De telles oscillations sont néfastes pour la flamme du brûleur, surtout dans la plage des faibles débits de gaz. Pour éviter ces oscillations, il est alors nécessaire d'associer un amortisseur, par exemple un amortisseur hydraulique, à l'équipage mobile constitué par le clapet de l'électrovanne et par le noyau mobile de son électro-aimant, comme cela est décrit dans le brevet américain et dans le brevet français précités. Il est d'ailleurs à noter que dans la plage des faibles débits, lorsque le clapet mobile est très près du siège circulaire de l'électrovanne, les oscillations du clapet peuvent aussi provoquer du bruit par suite de chocs répétés du clapet sur son siège.

C'est pourquoi, l'amortisseur hydraulique doit être très efficace et, de ce fait, il est relativement complexe à réaliser. En particulier, le jeu radial entre le piston et le cylindre de l'amortisseur hydraulique doit être très faible, ce qui nécessite une grande précision mécanique d'usinage et de montage de ces deux éléments. En outre, comme la présence de l'amortisseur hydraulique diminue fortement la vitesse de déplacement du clapet mobile, l'électrovanne a un fort temps de réponse et on doit prévoir un clapet anti-retour branché hydrauliquement en parallèle sur l'amortisseur, pour permettre une fermeture rapide du clapet de l'électrovanne lorsque celle-ci doit pouvoir être utilisée également comme électrovanne de sécurité. En effet, dans ce cas, le clapet de l'électrovanne de sécurité doit pouvoir être fermé en moins d'une seconde.

Pour toutes les raisons indiquées plus haut, les électrovannes du genre de celles décrites dans le brevet US-A-3 108 777 ou FR-A-2 650 362 sont relativement coûteuses. En outre, si l'emploi d'un courant alternatif ou de type alternatif pour exciter l'électro-aimant permet d'éliminer au moins partiellement l'hystérésis magnétique de l'électro-aimant, par contre cela ne supprime pas l'hystérésis mécanique due frottements. Comme l'adjonction d'un amortisseur hydraulique à l'électrovanne a pour effet d'augmenter les frottements, un tel amortisseur augmente donc l'hystérésis mécanique, et cela d'autant plus que l'amortisseur est plus efficace. Or, pour les mêmes raisons que celles exposées dans le document FR-A-2 650 362, l'hystérésis mécanique est gênante dans le cas où l'électrovanne est utilisée comme élément de réglage dans une boucle de régulation en température, car elle détériore la précision de la régulation.

Il est également connu des documents brevets CH 581 284 A (KLEIN SCHANZLIN & BECKER AG), FR 619 503 A (P. PASCALE) et US 4 125 129 A (BAUMANN HANS D) des clapets comprenant deux parties. Cependant, ces deux parties ne sont pas détachées, mais liées rigidement l'une à l'autre.

La présente invention a donc principalement pour but de fournir une vanne du genre définie en préambule, permettant de régler le débit d'un fluide liquide ou gazeux de façon précise et selon une loi prédéfinie en fonction du déplacement axial de son clapet mobile, sans nécessiter une précision mécanique importante, de sorte que la vanne puisse être fabriquée à un prix nettement moindre que celui des vannes connues du même genre.

La présente invention a également pour but de fournir une vanne au moyen de laquelle le débit du fluide peut être régler de manière fine et régulière au moins dans la plage des faibles débits de la caractéristique débit/déplacement de la vanne.

A titre auxiliaire, la présente invention a également pour but de fournir une électrovanne permettant de moduler le débit d'un fluide sous pression, dont le clapet mobile est commandé par un électro-aimant excité en courant alternatif ou de type alternatif et associé à un amortisseur hydraulique, l'ensemble ayant une faible hystérésis magnétique, une faible hystérésis mécanique et un meilleur temps de réponse, et étant simple et peu coûteux à fabriquer.

A cet effet, la vanne selon l'invention est caractérisée en ce que ladite seconde partie du clapet est détachée de la première partie du clapet et a une surface extérieure cylindrique d'un diamètre tel qu'elle est en contact glissant sans frottement avec la surface cylindrique dudit alésage, et qu'il comprend un moyen rapprochant lesdites première et seconde parties du clapet pour réaliser un simple contact de l'une avec l'autre et maintenant en permanence ce contact, de telle façon qu'elles se déplacent axialement ensemble et de la même quantité, sous l'action dudit moyen de commande. Dans un mode de réalisation de l'invention, la seconde partie du clapet comporte au moins un évidement formé dans la surface extérieure cylindrique de la seconde partie du clapet de manière à définir un passage ayant une forme prédéfinie.

Ainsi, du fait que les première et seconde parties du clapet sont détachées l'une de l'autre, la tige de commande qui est reliée à la première partie du clapet n'a plus besoin d'être parfaitement alignée avec l'axe du siège circulaire, et elle n'a donc plus besoin d'être montée et guidée de façon extrêmement précise. En conséquence, la fabrication et le montage de la vanne s'en trouvent grandement simplifiés. Comme la seconde partie du clapet est montée coulissante dans l'alésage cylindrique du siège et est en contact glissant avec ledit alésage, la seconde partie du clapet reste en permanence parfaitement alignée et centrée sur l'axe du siège circulaire, de sorte qu'il suffit de donner une forme appropriée à l'évidement (ou aux évidements) qui est formé dans la surface extérieure cylindrique de la seconde partie du clapet, pour obtenir la valeur désirée du débit du fluide pour chaque position axiale de la seconde partie du clapet par rapport au siège circulaire, donc pour obtenir la caractéristique débit/déplacement désirée.

De préférence, le ou les passages formés par le ou les évidements susmentionnés a ou ont une section de passage qui varie dans la direction du déplacement axial du clapet de façon à obtenir la caractéristique débit/déplacement désirée. Comme on le verra plus loin, le ou les passages susmentionnés peuvent être conformés de telle manière que la caractéristique débit/déplacement obtenue présente une faible pente dans la région des faibles débits. Ceci est particulièrement avantageux dans le cas où la vanne est réalisée sous la forme d'une électrovanne commandée par un électro-aimant excité en courant de type alternatif, associé à un ressort de rappel qui maintient le clapet dans sa première position en l'absence d'excitation de l'électro-aimant, et à un amortisseur hydraulique qui contrôle le déplacement du clapet provoqué par l'excitation de l'électro-aimant. En effet, dans ce cas, étant donné que dans la plage des faibles débits un faible déplacement du clapet n'entraîne qu'une très faible variation du débit, il devient possible de tolérer des petites oscillations mécaniques résiduelles du clapet. En conséquence, l'amortisseur hydraulique de l'électrovanne selon l'invention n'a pas besoin d'avoir un pouvoir d'amortissement aussi élevé que celui des électrovannes antérieurement connues. Il en résulte que la construction de l'amortisseur hydraulique peut être considérablement simplifiée. En particulier, le jeu entre le piston et le cylindre de l'amortisseur hydraulique peut être d'environ 1 mm, alors qu'il devait être de 20 µ dans l'amortisseur associé aux électrovannes connues. En outre, comme le clapet est moins freiné par l'amortisseur hydraulique, le temps de réponse de l'électrovanne est nettement amélioré. En outre, l'électrovanne peut se fermer rapidement, de façon naturelle, sous l'action du ressort de rappel du clapet, sans qu'il soit nécessaire de monter un clapet anti-retour hydrauliquement en parallèle sur l'amortisseur hydraulique. L'électrovanne selon l'invention convient donc bien pour être utilisée également comme électrovanne de sécurité. Enfin, les petites oscillations mécaniques résiduelles susmentionnées procurent, par effet de louvoiement, une réduction des frottements qui, combinée à la réduction des frottements internes de l'amortisseur hydraulique, permet d'éliminer pratiquement complètement l'hystérésis mécanique qui était rencontrée dans les électrovannes antérieurement connues précitées.

Dans un mode de réalisation de la présente invention, le moyen qui permet de maintenir en permanence les première et seconde parties du clapet en contact l'une avec l'autre peut être constitué par un ressort, par exemple un ressort hélicoïdal qui repousse axialement la seconde partie du clapet contre la première partie de celui-ci.

Selon un autre mode de réalisation de l'invention, ledit moyen de maintien peut être par exemple constitué par un aimant permanent, qui est porté par l'une des première et seconde parties du clapet, l'autre partie étant alors réalisée au moins partiellement en une matière magnétisable.

D'autres caractéristiques et avantages de la présente invention ressortiront mieux au cours de la description suivante donnée en référence aux dessins annexés sur lesquels :
la figure 1 représente de manière schématique, en partie en coupe verticale et en partie en élévation, une électrovanne conforme à un premier mode de réalisation de l'invention, avec un clapet mobile composé de deux parties séparées, maintenues en contact l'une avec l'autre ;
la figure 2 montre, à plus grande échelle, l'une des deux parties du clapet de l'électrovanne de la figure 1, en élévation ;
la figure 3 est une vue partielle en coupe verticale suivant la ligne III-III de la figure 2 ;
la figure 4 est une vue suivant la flèche F de la figure 2 ;
la figure 5 est une vue en coupe suivant la ligne V-V de la figure 4 ;
la figure 6 est un graphique montrant la caractéristique débit/déplacement de l'électrovanne de la figure 1 ;
la figure 7 est une vue partielle d'une vanne ou d'une électrovanne conforme à un second mode de réalisation de la présente invention ;
la figure 8 est une vue en perspective montrant l'une des deux parties du clapet mobile de la vanne de la figure 7 ;
la figure 9 est un graphique montrant la caractéristique débit/déplacement de la vanne de la figure 7 ;
la figure 10 est une vue en perspective semblable à la figure 8 montrant une variante ;
la figure 11 est un graphique montrant la caractéristique débit/déplacement de la vanne de la figure 7 dans le cas où elle est équipée d'un clapet mobile ayant une partie conforme à la figure 10 ;
la figure 12 est une vue semblable à la figure 7 montrant encore un autre mode de réalisation de la présente invention ;
la figure 13 est une vue en perpective semblable aux figures 8 et 10, montrant l'une des deux parties du clapet de la vanne partiellement représentée dans la figure 12 ;
la figure 14 est un graphique montrant la caractéristique débit/déplacement de la vanne montrée dans la figure 12.

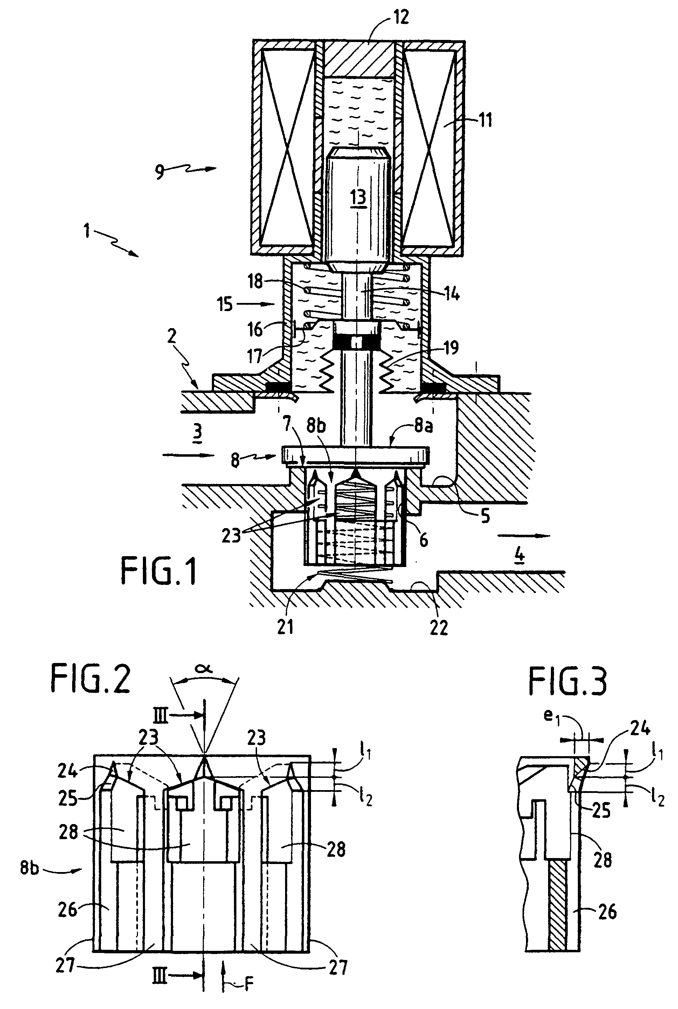

En se référant à la figure 1, l'électrovanne 1 conforme à l'invention comprend un corps 2 ayant un conduit d'entrée 3 et un conduit de sortie 4, qui est séparé du conduit d'entrée 3 par une cloison 5 dans laquelle est formé un alésage cylindrique 6. A l'une des extrémités de l'alésage 6 est formé un siège circulaire 7 pour un clapet mobile 8. Un moyen de commande 9 permet de déplacer le clapet 8 axialement, c'est-à-dire dans la direction axiale de l'alésage 6 et du siège circulaire 7, entre une première position (montrée dans la figure 1) dans laquelle la vanne 1 est fermée, et une seconde position dans laquelle la vanne 1 est ouverte. Le clapet 8 peut être placé dans n'importe quelle position désirée entre ses première et seconde positions par le moyen de commande 9.

Dans l'exemple de réalisation représenté, le moyen de commande 9 est constitué par un électro-aimant, essentiellement composé d'un solénoïde 11, d'un circuit magnétique fixe ou culasse 12 et d'un noyau mobile 13 à l'intérieur du solénoïde 11. La culasse 12 et le noyau 13 forment les pôles de l'électro-aimant 9, et ils sont conçus de façon à entraîner le noyau 13 suivant un déplacement proportionnel à l'intensité du courant d'excitation fourni par une source de courant (non montré). Le noyau 13 est relié au clapet 8 par une tige 14.

Dans le cas où la source de courant d'excitation est une source de courant de type alternatif, un amortisseur 15 est prévu pour amortir des oscillations du clapet 8. Cette amortisseur 15 se compose essentiellement d'un cylindre 16, qui entoure coaxialement la tige 14 et qui est rempli d'huile, ainsi que d'un piston 17, qui est porté par la tige 14 et qui divise le volume intérieur du cylindre 16 en une chambre supérieure et une chambre inférieure. Un ressort hélicoïdal 18, placé dans la chambre supérieure du cylindre 16 repousse le piston 17 vers le bas et maintient par suite le clapet 8 en contact étanche avec le siège 7 en l'absence de courant d'excitation. Un soufflet d'étanchéité 19, qui est fixé d'une part à la tige 14 et, d'autre part, à l'extrémité inférieure du cylindre 16, sépare le conduit d'entrée 3 de la chambre inférieure du cylindre 16 de l'amortisseur qui contient de l'huile.

L'électrovanne 1 qui a été décrite ci-dessus est tout à fait classique, de sorte qu'il n'est pas jugé utile de la décrire plus en détail, étant donné que l'on pourra se référer au besoin au brevet FR-A-2 650 362 ou au brevet US-A-3 108 777.

Le clapet 8 est composé de façon connue en soi de deux parties 8a et 8b. La partie 8a, qui peut être par exemple constituée par une coupelle métallique, ouverte vers le bas et contenant une garniture d'étanchéité, par exemple en caoutchouc, sert d'élément d'obturation en ce sens que, en l'absence d'excitation de l'électro-aimant, la partie 8a s'applique de manière étanche contre le siège circulaire 7 pour fermer la vanne et empêcher tout écoulement de fluide à travers l'alésage 6 depuis le conduit d'entrée 3 vers le conduit de sortie 4. Lorsque l'électrovanne 1 est ouverte, c'est-à-dire lorsque la partie 8a du clapet 8 est écartée du siège 7, la partie 8b du clapet 8 sert à régler la valeur du débit du fluide qui s'écoule vers le conduit de sortie 4, en fonction de la position axiale du clapet 8 par rapport au siège 7.

Dans l'électrovanne selon l'invention, la partie 8b du clapet 8 est détachée de la partie 8a, avec laquelle elle est simplement maintenue en contact, par exemple au moyen d'un ressort 21 tel qu'un ressort hélicoïdal de compression, dont l'une des extrémités prend appui contre une paroi interne 22 du corps 2 et dont l'autre extrémité prend axialement appui contre la partie 8b du clapet 8 d'une manière qui sera décrite plus loin. En outre, conformément à la présente invention, la partie 8b du clapet 8 se présente sous la forme d'une pièce cylindrique, dont la surface cylindrique extérieure a un diamètre très légèrement inférieur au diamètre intérieur de l'alésage 6, de telle façon que la pièce cylindrique constituant la partie 8b du clapet 8 puisse glisser pratiquement sans jeu radial et sans frottement dans l'alésage 6.

Ainsi, il est clair que lorsque la partie 8a du clapet 8 est écartée du siège 7 en étant déplacée vers le haut par l'électro-aimant 9, la partie 8b du clapet 8 est également déplacée vers le haut par le ressort 21, tout en restant en contact avec la partie 8a du clapet. Inversement, lorsque la partie 8a du clapet est abaissée en direction du siège 7, elle repousse vers le bas la partie 8b du clapet en comprimant le ressort 21. On voit donc que les deux parties 8a et 8b du clapet peuvent se déplacer axialement ensemble et de la même quantité sous l'action combinée de l'électro-aimant 9 et du ressort 21. On voit également qu'il n'est pas nécessaire que la tige 14 soit parfaitement alignée avec l'axe du siège circulaire 7 ou avec l'axe de la pièce cylindrique constituant la partie 8b du clapet pour que le système puisse fonctionner correctement.

Au moins un évidement 23 est formé dans la surface cylindrique extérieure de la pièce constituant la partie 8b du clapet 8. Cet évidement 23 est formé de manière à définir un passage ayant une forme prédéfinie telle que l'on obtienne un débit de fluide ayant une valeur prédéterminée en fonction de la position axiale du clapet 8 par rapport au siège 7.

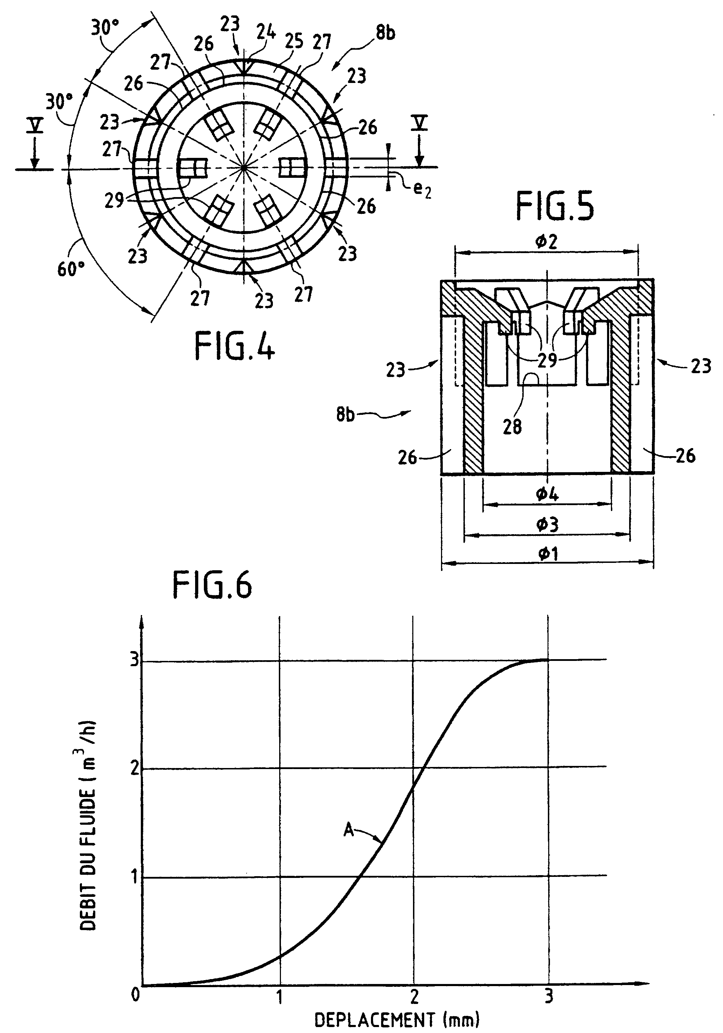

Les figures 2 à 5 montrent une première forme de réalisation de la pièce cylindrique constituant la partie 8b du clapet 8. La pièce 8b montrée dans les figures 2 à 5 est essentiellement constituée par un élément cylindrique creux, qui comporte plusieurs fentes ou encoches longitudinales 23, par exemple six encoches 23 qui sont régulièrement réparties angulairement dans sa surface périphérique. Plus précisément, comme cela est plus particulièrement visible dans les figures 2 à 4, chaque encoche 23 peut comporter trois parties successives 24, 25 et 26 qui se suivent depuis l'extrémité supérieure de la pièce 8b du clapet 8 vers l'extrémité inférieure de celle-ci. La partie supérieure 24 de l'encoche 23, qui a une longueur axiale I₁, a une largeur qui augmente relativement lentement depuis l'extrémité supérieure de la pièce 8b vers le bas, c'est-à-dire que, vue de l'extérieur, la partie supérieure 24 de l'encoche 23 a une forme en V renversé avec un angle aigu. La section transversale de la partie 24 de l'encoche 23 a également une forme en V, ouvert vers l'extérieur de la pièce 8b, comme montré dans la figure 4. En outre, la partie 24 de l'encoche 23 a une profondeur qui augmente depuis une valeur nulle, sensiblement à l'extrémité supérieure de la pièce 8b, jusqu'à une valeur prédéterminée e₁ dans la région où commence la partie 25 de l'encoche 23, comme montré dans la figure 3. La partie 25 de l'encoche 23, qui a une longueur axiale I₂, a une largeur qui augmente nettement plus rapidement que celle de la partie 24. Autrement dit, vue de l'extérieur de la pièce 8b, la partie 24 a une forme en toit relativement pointue (angle aigu α), tandis que la partie 25 a une forme en toit relativement aplati. Enfin, la troisième partie 26 de l'encoche 23, qui peut s'étendre sur la longueur restante de la pièce 8b, a une largeur constante et une profondeur constante sur toute sa longueur. Comme montré dans la figure 4, le fond des parties 26 de toutes les encoches 23 est formé par une surface cylindrique et les parties 26 des encoches 23 sont séparées les unes des autres par des nervures longitudinales 27 ayant une largeur constante e₂. Une large ouverture 28 est formée dans le fond de la partie 25 et dans la partie supérieure du fond de la partie 26 de chaque encoche 23, comme montré dans les figures 2, 3 et 5.

Comme montré dans les figures 4 et 5, plusieurs pattes 29, par exemple six pattes 29, en forme de crochet, font radialement saillie sur la surface cylindrique intérieure de la pièce cylindrique 8b. Ces pattes 29 forment ensemble à la fois un moyen de butée et un moyen de centrage pour l'extrémité supérieure de ressort 21, qui pousse la partie 8b du clapet 8 au contact de la partie 8a de celui-ci.

A titre d'exemple, dans le cas où l'alésage 6 a un diamètre intérieur de 13 mm, les cotes ⌀1, ⌀2, ⌀3, ⌀4, I₁, I₂, e₁, e₂, α peuvent avoir les valeurs suivantes :

| | |
|---|---|
| ⌀1 ≅ 12,9 mm | I₁ = 1 mm |
| ⌀2 = 11 mm | I₂ = 1 mm |
| ⌀3 = 10 mm | e₁ = 2 mm |
| ⌀4 = 8 mm | e₂ = 1 mm |
| α = 60° | |

Dans la figure 6, la courbe A représente la caractéristique débit/déplacement obtenue avec l'électrovanne des figures 1 à 5, dont la pièce 8b a les dimensions indiquées ci-dessus, lorsque cette électrovanne est alimentée en gaz de ville et que son clapet 8 est déplacé par l'électro-aimant 9 depuis la position montrée dans la figure 1, dans laquelle l'électrovanne est fermée, jusqu'à une position dans laquelle la partie 8a du clapet 8 est écartée de trois millimètres du siège 7. Comme on peut le voir dans la figure 6, lorsque la partie 8a du clapet 8 est encore très proche du siège 7 ( moins de 1 mm), c'est-à-dire dans la plage des faibles débits, le débit du gaz varie très peu avec le déplacement du clapet. Ceci est particulièrement favorable dans le cas d'une électrovanne modulant le débit du gaz envoyé au brûleur d'une chaudière, car la flamme du brûleur peut rester stable même si l'électro-aimant 9 de l'électrovanne est alimenté en courant alternatif.

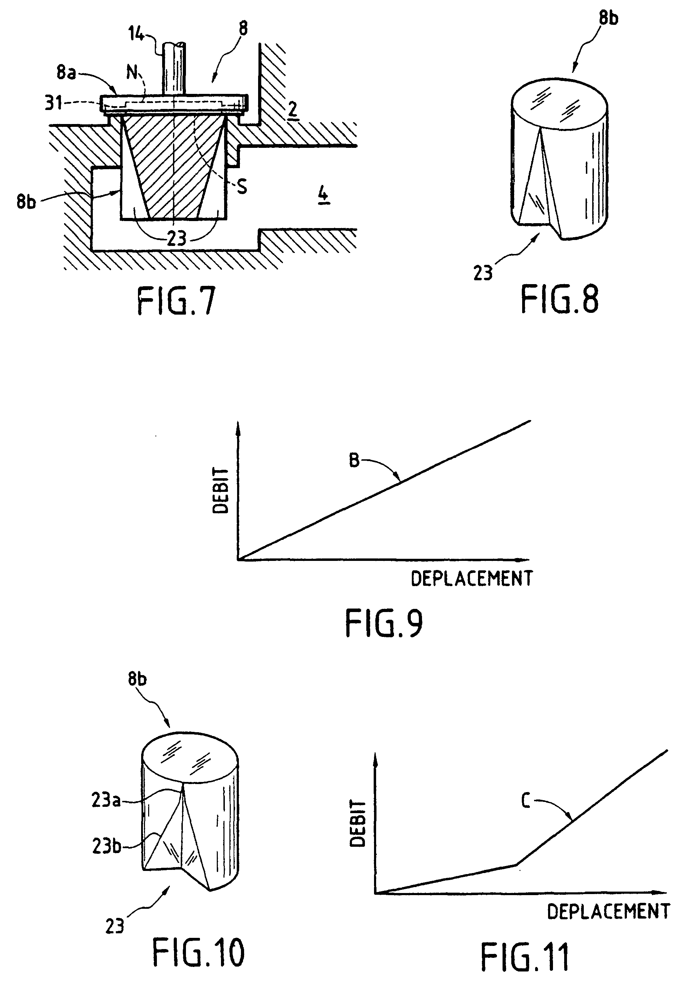

Les figures 7 et 8 illustrent un autre mode de réalisation de l'invention, dans lequel la partie 8b du clapet 8 est ici constituée par un élément cylindrique plein comportant deux évidements ou rainures longitudinales 23 dans sa surface périphérique extérieure, dans des positions diamétralement opposées. Chaque rainure longitudinale 23 a ici une section transversale en forme de V, sur toute la longueur de la partie 8b du clapet, avec une profondeur qui croît linéairement d'une valeur 0 à une valeur prédéfinie de l'extrémité supérieure à l'extrémité inférieure de la pièce cylindrique 8b (figure 7). Avec une telle pièce cylindrique 8b, on obtient une caractéristique débit/déplacement B qui est linéaire, comme montré dans la figure 9.

D'autre part, dans le mode de réalisation de la figure 7, au lieu d'utiliser un ressort comme moyen pour maintenir la partie 8b du clapet 8 en contact avec la partie 8a de celui-ci, on utilise ici un aimant permanent 31. L'aimant 31 peut avoir par exemple la forme d'un disque qui est porté par la partie 8a du clapet 8. Dans ce cas, la partie 8b doit être réalisée au moins en partie en une matière magnétisable. Bien entendu, on pourrait aussi avoir l'arrangement inverse. Par exemple, l'aimant permanent pourrait être constitué par un barreau aimanté noyé en position centrale dans la partie 8b du clapet 8, la partie 8a de celui-ci étant alors réalisée, dans sa partie centrale, en une matière magnétisable.

La partie 8b du clapet montrée dans la figure 10 a, comme celle montrée dans la figure 8, deux évidements ou rainures longitudinales 23 formées en position diamétralement opposées dans sa surface périphérique, chaque rainure 23 ayant une section transversale en forme de V. Toutefois, dans la pièce 8b de la figure 10, chaque rainure 23 a, dans sa partie supérieure 23a, une largeur qui augmente linéairement moins rapidement que dans la partie inférieure 23b de la rainure 23, de sorte que l'on obtient une caractéristique débit/déplacement ayant la forme représentée par la courbe C dans la figure 11.

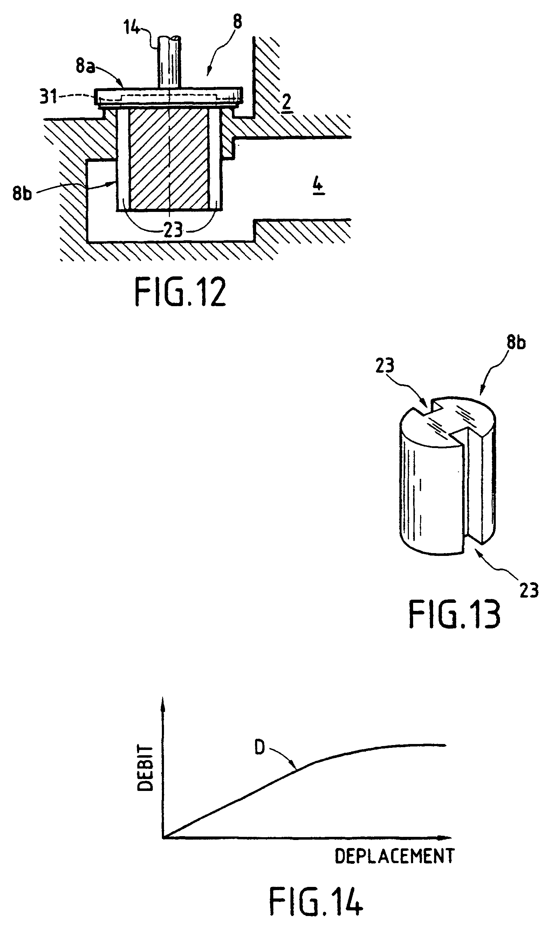

Dans le mode de réalisation représenté dans les figures 12 et 13, la partie 8b du clapet 8 est encore réalisée sous la forme d'une pièce cylindrique pleine, qui est maintenue en contact avec la partie 8a du clapet par un aimant permanent 31. Dans ce mode de réalisation, la partie 8b du clapet diffère de celles qui sont montrées dans les figures 8 et 10, en ce que chacune des deux rainures longitudinales 23 a ici une largeur et une profondeur qui sont constantes sur toute la longueur de la partie 8b. On obtient alors une caractéristique débit/déplacement ayant la forme représentée par la courbe D dans la figure 14.

Il va de soi que les modes de réalisation de la présente invention qui ont été décrits ci-dessus ont été donnés à titre d'exemple purement indicatif et nullement limitatif et que de nombreuses modifications peuvent être facilement apportées par l'homme de l'art sans pour autant sortir du cadre de l'invention. C'est ainsi notamment que le sens d'écoulement du fluide à l'intérieur de l'électrovanne 1 pourrait être l'inverse de celui représenté, le conduit 4 étant alors le conduit d'entrée et le conduit 3 le conduit de sortie En outre, l'amortisseur hydraulique 15 peut être remplacé par un amortisseur pneumatique. En outre, au lieu d'utiliser un électro-aimant pour commander le clapet 8 de la vanne, on pourrait utiliser d'autres actionneurs linéaires, comme par exemple un système à vis sans fin et à écrou entraîné par un moteur électrique réversible, ou encore tout autre moyen de commande, y compris purement mécanique, apte à produire un déplacement linéaire du clapet 8. En effet, la présente invention est applicable à toute sorte de vannes, dont le clapet est mobile axialement par rapport à un siège circulaire, dès lors que l'on désire obtenir une caractéristique débit/déplacement prédéfinie, avec une bonne précision, sans pour autant qu'il soit nécessaire que le clapet 8 et sa tige de commande 14 soient parfaitement centrés par rapport à l'axe du siège 7.

## Revendications

1. Vanne pour le réglage du débit d'un fluide liquide ou gazeux, comprenant un corps (2) ayant une entrée (3) et une sortie (4) pour le fluide, une cloison (5) qui sépare l'entrée de la sortie et qui comporte un alésage cylindrique (6) à l'une des extrémités duquel est formé un siège circulaire (7), un clapet (8) mobile dans la direction axiale du siège circulaire entre des première et seconde positions dans lesquelles la vanne (1) est respectivement fermée et ouverte, et un moyen de commande (9) relié fonctionnellement audit clapet (8) pour l'amener dans n'importe quelle position axiale désirée entre ses première et seconde positions afin de régler le débit du fluide, ledit clapet (8) comportant une première partie (8a) qui fait office d'élément d'obturation quand le clapet est dans sa première position, et une seconde partie (8b) qui est engagée dans ledit alésage (6) et qui est conformée pour régler le débit du fluide à une valeur désirée selon la position axiale du clapet entre ses première et seconde positions, **caractérisée en ce que** ladite seconde partie (8b) du clapet (8) est détachée de la première partie (8a) du clapet et a une surface extérieure cylindrique d'un diamètre tel qu'elle est en contact glissant sans frottement avec la surface cylindrique dudit alésage (6), et qu'il comprend un moyen (21 ; 31) rapprochant lesdites première et seconde parties (8a et 8b) du clapet (8) pour réaliser un simple contact de l'une avec l'autre et maintenant en permanence ce contact, de telle façon qu'elles se déplacent axialement ensemble et de la même quantité, sous l'action dudit moyen de commande (9).

2. Vanne selon la revendication 1, **caractérisée en ce que** ladite seconde partie (8b) du clapet (8) comporte au moins un évidement (23) formé dans la surface extérieure cylindrique de la seconde partie (8b) du clapet (8), de manière à définir un passage ayant une forme prédéfinie.

3. Vanne selon la revendication 2, **caractérisée en ce que** ledit passage a une section de passage qui varie dans ladite direction axiale.

4. Vanne selon la revendication 3, **caractérisée en ce que** la seconde partie (8b) du clapet (8) est constituée par un élément cylindrique creux, dont la paroi périphérique comporte, à titre de passage à section variable. au moins une fente ou encoche longitudinale (23) qui a une largeur variant dans la direction longitudinale de l'élément cylindrique creux.

5. Vanne selon la revendication 3, **caractérisée en ce que** la seconde partie (8b) du clapet (8) est constituée par un élément cylindrique dans la surface cylindrique extérieure duquel est formée, à titre de passage à section variable, au moins une rainure longitudinale (23) dont la largeur et/ou la profondeur varient dans la direction longitudinale de l'élément cylindrique.

6. Vanne selon l'une quelconque des revendications 1 à 5, **caractérisée en ce que** ladite première partie (8a) du clapet (8) est reliée fonctionnellement audit moyen de commande (9) et **en ce que** le moyen qui maintient les première et seconde parties (8a et 8b) du clapet (8) en contact l'une avec l'autre est constitué par un ressort (21) qui repousse axialement la seconde partie (8b) du clapet contre la première partie (8a) du clapet.

7. Vanne selon l'une quelconque des revendications 1 à 5, **caractérisée en ce que** ladite première partie (8a) du clapet (8) est reliée fonctionnellement au moyen de commande (9) et **en ce que** le moyen qui maintient les première et seconde parties (8a et 8b) du clapet (8) en contact l'une avec l'autre est constitué par un aimant permanent (31) qui est porté par l'une des première et seconde parties (8a et 8b) du clapet, l'autre partie étant réalisée au moins partiellement en une matière magnétisable.

8. Vanne selon l'une quelconque des revendications 1 à 7, **caractérisée en ce que** ledit moyen de commande (9) comprend un électro-aimant (11-13) excité en courant de type alternatif et comportant un noyau mobile (13) relié par une tige (14) au clapet (8) de la vanne (1), associé à un ressort de rappel (18) qui maintient le clapet (8) dans sa première position en l'absence d'excitation de l'électro-aimant, et à un amortisseur hydraulique (15) qui contrôle le déplacement du clapet (8) provoqué par l'excitation de l'électro-aimant.

## Claims

1. A valve for regulating the rate of flow of a liquid or gaseous fluid, comprising a body (2) with an inlet (3) and an outlet (4) for the fluid, a partition (5) which separates the inlet from the outlet and which comprises a cylindrical bore (6) at one of the ends of which there is formed a circular seat (7), a disc (8) adapted for movement in the axial direction of the circular seat between first and second positions in which the valve (1) is respectively closed and opened, and control means (9) functionally connected to the said disc (8) to bring it into whatever is the desired axial position between its first and second positions in order to regulate the rate of flow of the fluid, the said disc (8) comprising a first part (8a) which acts as an occluding element when the disc is in its first position, and the second part (8b) which is engaged in the said bore (6) and which is shaped in such a way as to regulate the rate of flow of the fluid to a desired value according to the axial position of the disc between its first and second positions, **characterised in that** the said second part (8b) of the disc (8) is detached from the first part (8a) of the disc and has a cylindrical outer surface of such a diameter that it is in frictionless sliding contact with the cylindrical surface of the said bore (6), and which comprises means (21; 31) bringing towards each other the said first and second parts (8a and 8b) of the disc (8) in order to establish a simple contact one with the other and maintaining this contact permanently in such a way that they move axially together and by the same amount under the action of the said control means (9).

2. A valve according to Claim 1, **characterised in that** the said second part (8b) of the disc (8) comprises at least one recess (23) formed in the outer cylindrical surface of the second part (8b) of the disc (8) in order to define a passage of predefined form.

3. A valve according to Claim 2, **characterised in that** the said passage has a cross-section which varies in the said axial direction.

4. A valve according to Claim 3, **characterised in that** the second part (8b) of the disc (8) is constituted by a hollow cylindrical element the peripheral wall of which comprises, as a passage of variable cross-section, at least one longitudinal slot or notch (23) the width of which varies in the longitudinal direction of the hollow cylindrical element.

5. A valve according to Claim 3, **characterised in that** the second part (8b) of the disc (8) is constituted by a cylindrical element in the outer cylindrical surface of which there is formed, as a passage of variable cross-section, at least one longitudinal groove (23) of which the width and/or the depth vary in the longitudinal direction of the cylindrical element.

6. A valve according to any one of Claims 1 to 5, **characterised in that** the said first part (8a) of the disc (8) is functionally connected to the said control means (9) and **in that** the means which maintains the first and second parts (8a and 8b) of the disc (8) in contact with each other is constituted by a spring (21) which pushes back axially the second part (8b) of the disc against the first part (8a) of the disc.

7. A valve according to any one of Claims 1 to 5, **characterised in that** the said first part (8a) of the disc (8) is functionally connected to the control means (9) and **in that** the means which maintains the said first and second parts (8a and 8b) of the disc (8) in contact with each other is constituted by a permanent magnet (31) which is carried by one of the first and second parts (8a and 8b) of the disc, the other part being at least partially constructed of a magnetisable material.

8. A valve according to any one of claims 1 to 7, **characterised in that** the said control means (9) comprises an electromagnet (11 to 13) energised with current of an alternating type and comprising a movable core (13) connected by a rod (14) to the disc (8) of the valve (1), associated with a return spring (18) which maintains the disc (8) in its first position in the absence of any energising of the electromagnet, and with a hydraulic shock absorber (15) which controls the displacement of the disc (8) which is brought about by the electromagnet being energised.

## Patentansprüche

1. Ventil zur Regelung der Durchflußmenge eines flüssigen oder gasförmigen Fluids, mit einem Körper (2), der einen Einlaß (3) und einen Auslaß (4) für das Fluid aufweist, einer Trennwand (5), die den Einlaß von dem Auslaß trennt und eine zylindrische Bohrung (6) mit einem an einem Ende davon ausgebildeten kreisförmigen Sitz (7) enthält, einem Ventilglied (8), das in Axialrichtung des kreisförmigen Sitzes zwischen einer ersten und einer zweiten Stellung beweglich ist, in denen das Ventil (1) geschlossen bzw. geöffnet ist, und einem Steuermittel (9), das funktionsmäßig mit dem Ventilglied (8) verbunden ist, um es in eine beliebige gewünschte axiale Stellung zwischen seiner ersten und seiner zweiten Stellung zu bringen und so die Durchflußmenge des Fluids zu regeln, wobei das Ventilglied (8) einen ersten Teil (8a), der als Verschlußelement dient, wenn sich das Ventilglied in seiner ersten Stellung befindet, und einen zweiten Teil (8b), der in der Bohrung (6) in Eingriff steht und zur Regelung der Durchflußmenge des Fluids auf einen gewünschten Wert in Abhängigkeit von der axialen Stellung des Ventilglieds zwischen seiner ersten und seiner zweiten Stellung konfiguriert ist, umfaßt, **dadurch gekennzeichnet, daß** der zweite Teil (8b) des Ventilglieds (8) vom ersten Teil (8a) des Ventilglieds abgeteilt ist und eine zylindrische Außenfläche mit einem solchen Durchmesser besitzt, daß er sich mit der zylindrischen Fläche der Bohrung (6) ohne Reibung in Gleitkontakt befindet, und ein Mittel (21; 31) zum Annähern des ersten und des zweiten Teils (8a und 8b) des Ventilglieds (8) aneinander aufweist, um einen einfachen gegenseitigen Kontakt herzustellen und diesen Kontakt dauerhaft aufrechtzuerhalten, so daß sie sich unter der Wirkung des Steuermittels (9) in Axialrichtung zusammen und in gleichem Ausmaß verschieben.

2. Ventil nach Anspruch 1, **dadurch gekennzeichnet, daß** der zweite Teil (8b) des Ventilglieds (8) mindestens eine Aussparung (23) aufweist, die in der zylindrischen Außenfläche des zweiten Teils (8b) des Ventilglieds (8) so ausgebildet ist, daß sie einen Durchlaß mit vordefinierter Form definiert.

3. Ventil nach Anspruch 2, **dadurch gekennzeichnet, daß** der Durchlaß einen Strömungsquerschnitt aufweist, der sich in Axialrichtung ändert.

4. Ventil nach Anspruch 3, **dadurch gekennzeichnet, daß** der zweite Teil (8b) des Ventilglieds (8) durch ein hohles zylindrisches Element gebildet wird, dessen Umfangswand als Durchlaß mit veränderlichem Querschnitt mindestens einen Längsschlitz oder eine Längskerbe (23) enthält, dessen bzw. deren Breite sich in Längsrichtung des hohlen zylindrischen Elements ändert.

5. Ventil nach Anspruch 3, **dadurch gekennzeichnet, daß** der zweite Teil (8b) des Ventilglieds (8) durch ein zylindrisches Element gebildet wird, in dessen zylindrischer Außenfläche als Durchlaß mit veränderlichem Querschnitt mindestens eine Längsnut (23) ausgebildet ist, deren Breite und/oder Tiefe sich in Längsrichtung des zylindrischen Elements ändert.

6. Ventil nach einem der Ansprüche 1 bis 5, **dadurch gekennzeichnet, daß** der erste Teil (8a) des Ventilglieds (8) funktionsmäßig mit dem Steuermittel (9) verbunden ist und daß das Mittel, das den ersten und den zweiten Teil (8a und 8b) des Ventilglieds (8) in gegenseitigem Kontakt hält, durch eine Feder (21) gebildet wird, die den zweiten Teil (8b) des Ventilglieds axial gegen den ersten Teil (8a) des Ventilglieds schiebt.

7. Ventil nach einem der Ansprüche 1 bis 5, **dadurch gekennzeichnet, daß** der erste Teil (8a) des Ventilglieds (8) funktionsmäßig mit dem Steuermittel (9) verbunden ist und daß das Mittel, das den ersten und den zweiten Teil (8a und 8b) des Ventilglieds (8) in gegenseitigem Kontakt hält durch einen Dauermagnet (31) gebildet wird, der von dem ersten oder dem zweiten Teil (8a und 8b) des Ventilglieds getragen wird, wobei der andere Teil zumindest teilweise aus einem magnetisierbaren Werkstoff hergestellt ist.

8. Ventil nach einem der Ansprüche 1 bis 7, **dadurch gekennzeichnet, daß** das Steuermittel (9) einen Elektromagnet (11 - 13) enthält, der durch Wechselstrom erregt wird und einen beweglichen Kern (13) aufweist, der durch eine Stange (14) mit dem Ventilglied (8) des Ventils (1) verbunden ist, das einer Rückholfeder (18), die das Ventilglied (8) bei fehlender Erregung des Elektromagneten in seiner ersten Stellung hält, und einem hydraulischen Dämpfer (15) zugeordnet ist, der die durch die Erregung des Elektromagneten bewirkte Verschiebung des Ventilglieds (8) steuert.
